# EUROPÄISCHE PATENTSCHRIFT

(11) **EP 2 365 931 B1**
(45) Veröffentlichungstag und Bekanntmachung des Hinweises auf die Patenterteilung: **01.05.2013**
(21) Anmeldenummer: 09798900.8
(22) Anmeldetag: 30.11.2009
(51) Int. Cl.: B66C 17/20, B66C 19/00, B65G 63/02

(54) **VERFAHREN UND EINE ANLAGE ZUM UMSCHLAG VON NORMIERTEN LADUNGSTRÄGERN, INSBESONDERE ISO-CONTAINERN UND WECHSELAUFBAUTEN, ZWISCHEN SCHIENE UND STRASSE**
METHOD AND SYSTEM FOR TRANSFERRING STANDARD CARGO HOLDERS, ESPECIALLY ISO CONTAINERS AND SWAP BODIES, BETWEEN RAILWAYS AND ROADS
PROCÉDÉ ET INSTALLATION PERMETTANT DE TRANSBORDER DES SUPPORTS DE CHARGEMENT STANDARDISÉS, EN PARTICULIER DES CONTENEURS ISO ET DES CAISSES MOBILES, ENTRE LE RAIL ET LA ROUTE

(30) Priorität: 09.12.2008 DE 102008061198
(43) Veröffentlichungstag der Anmeldung: 21.09.2011
(73) Patentinhaber: Gottwald Port Technology GmbH, 40597 Düsseldorf (DE)
(72) Erfinder: FRANZEN, Hermann, 41238 Mönchengladbach (DE); WIESCHEMANN, Armin, 46119 Oberhausen (DE); HEGEWALD, Mike, 46117 Oberhausen (DE); MOUTSOKAPAS, Jannis, 40789 Monheim (DE)
(74) Vertreter: Moser & Götze
(86) Internationale Anmeldenummer: PCT/EP2009/066085
(87) Internationale Veröffentlichungsnummer: WO 2010/066602

(56) Entgegenhaltungen:
- EP-A1- 0 302 569
- EP-A1- 1 293 469
- EP-A2- 1 847 492
- WO-A1-96/09242
- WO-A1-2010/026076
- DE-A1- 19 740 557
- FR-A1- 2 785 273
- JP-A- 4 243 709
- US-A1- 2010 021 272

## Beschreibung

Die Erfindung betrifft eine Anlage zum Umschlag von normierten Ladungsträgern, insbesondere von ISO-Containern und Wechselaufbauten, zwischen Straße und Schiene, mit einem in einem Umschlagbereich Schiene an eine Gleisstrecke für Eisenbahnwaggons angrenzenden Umschlaggerät zum Be- und Entladen von normierten Ladungsträger auf beziehungsweise von den Eisenbahnwaggons.

Aus dem europäischen Patent EP 0 796 813 B1 ist bereits ein Portalkran für den Umschlag von Containern und Wechselaufbauten zwischen Schiene und Straße bekannt. Entsprechend der für einen Portalkran üblichen Bauweise ist eine auf einem Kranträger in deren Längsrichtung verfahrbare Krankatze vorgesehen, an der in Kranfahrrichtung des Portalkrans gesehen hintereinander und mit Abstand zueinander zwei hydraulische Kolben-Zylindereinheiten befestigt sind. Die Kolben-Zylindereinheiten sind jeweils vertikal ausgerichtet und bestehen im Wesentlichen aus einem Hubzylinder und einer darin bewegbaren Kolbenstange. Die Hubzylinder sind starr an der Krankatze befestigt und die Kolbenstangen ausgehend von der Krankatze nach unten in der Senkrichtung ausfahrbar und entsprechender Weise in Hubrichtung einfahrbar. An den der Krankatze gegenüberliegenden Enden der Kolbenstangen ist über Langlochverbindungen ein Aufhängerahmen befestigt, an dem ein Lastaufnahmemittel in Form eines Spreaderrahmens aufgehängt ist. Die Verbindung des Aufhängerahmens über Langlochverbindungen mit den Kolbenstangen ist gewählt worden, um Differenzen im Gleichlauf der Kolben-Zylindereinheiten und entsprechende Schrägstellungen der Container auszugleichen. Des Weiteren ist vorgesehen, dass der Aufhängerahmen und das hierin angeordnete Lastaufnahmemittel in Bezug auf die Längsachse der beiden Kolben-Zylindereinheiten seitlich um mindestens 500mm versetzt ist, damit von dem Portalkran auch Container oder Wechselaufbauten auf einen Eisenbahnwaggon abgesetzt oder von diesem aufgenommen werden können und gleichzeitig ein Oberleitungs-Fahrdraht durch die seitlich versetzte Anordnung des Lastaufnahmemittels an der Kolbenstange untergreifen kann.

Des Weiteren ist aus dem europäischen Patent EP 1 365 984 B1 ist ein Brückenkran zum Stapeln von Containern, insbesondere von ISO-Containern, bekannt, der innerhalb eines Container-Terminals Container in einen Lagerbereich ein- und oder aus diesem auslagert. Der Brückenkran weist einen Kranträger auf, der einen im Wesentlichen quaderförmigen Lagerbereich der Breite nach überspannt. Auf dem Kranträger und entlang dessen Längsrichtung ist eine Krankatze in Breitenrichtung des Lagerbereichs verfahrbar. Der Kranträger ist über Fahrwerke auf Schienen in Kranfahrtrichtung und somit quer zur Krankatze auf dem Kranträger sowie in Längsrichtung des Lagerbereichs verfahrbar. Um die Container handhaben zu können, ist an der Krankatze ein Mast angeordnet, der in Vertikalrichtung geführt und heb- oder senkbar ist. Der Mast ist als Kastenträger ausgebildet und für die Hub- und Senkbewegung des Mastes sind auf der Krankatze Hubwerke angeordnet. An dem unteren und in Richtung der zu handhabenden Container weisenden Ende des Mastes ist ein Lastaufnahmemittel für Container, insbesondere ein sogenannter Spreader, gelenkig aufgehängt. Das Lastaufnahmemittel ist über Seile mit den Hubwerken auf der Krankatze verbunden. Der Mast ist in Hub- und Senkrichtung nicht direkt angetrieben sondern nur indirekt über die am Lastaufnahmemittel angreifenden Seile. Die Verwendung eines starren Mastes zwischen der Krankatze und dem Lastaufnahmemittel bringt den Vorteil, dass eine pendelarme Handhabung der Container im Gegensatz zu auch verwendeten und ausschließlich an Seilen aufgehängten Lastaufnahmemitteln möglich ist.

Die japanische Patentschrift JP 4 243709 A betrifft ein Hochregallager mit einer Anlage zum Umschlag von Containern mit einem Umschlaggerät. Über das Umschlaggerät werden Container auf beziehungsweise von Eisenbahnwaggons geladen. Für den Transport der Container zwischen dem Umschlaggerät und dem Hochregallager zur Ein- beziehungsweise Auslagerung sind Transportpaletten vorgesehen, die über entlang des Hochregallagers verlaufenden Schienen verfahrbar sind.

Der vorliegenden Erfindung liegt die Aufgabe zugrunde, eine Anlage zum Umschlag von normierten Ladungsträgern, insbesondere ISO-Containern und Wechselaufbauten, zwischen Schiene und Straße zu optimieren.

Diese Aufgabe wird durch eine Anlage zum Umschlag von normierten Ladungsträgern, insbesondere ISO-Containern und Wechselaufbauten, zwischen Schiene und Straße mit den Merkmalen des Anspruchs 1 gelöst. Vorteilhafte Ausgestaltungen der Erfindung sind in den Ansprüchen 2 bis 10 angegeben.

Erfindungsgemäß wird bei einer Anlage zum Umschlag von normierten Ladungsträgern, insbesondere von ISO-Containern und Wechselaufbauten, zwischen Straße und Schiene, mit einem in einem Umschlagbereich Schiene an eine Gleisstrecke für Eisenbahnwaggons angrenzenden Umschlaggerät zum Be- und Entladen von normierten Ladungsträgern auf beziehungsweise von den Eisenbahnwaggons eine Umschlagsoptimierung dadurch erreicht, dass an das Umschlaggerät ein Fahrbereich für fahrerlose Transportfahrzeuge zum An- und Abtransport von normierten Ladungsträger zu beziehungsweise von dem Umschlaggerät angrenzt und an den Fahrbereich ein Be- und Entladebereich zum An- und Abtransport von normierten Ladungsträgern angrenzt und das Umschlaggerät eine entlang eines Kranträgers in einer Katzfahrtrichtung bewegbare Krankatze aufweist, an der ein starrer und sich in einer Hub- und Senkrichtung erstreckender Mast geführt ist, der über mindestens ein an der Krankatze angeordnetes Hubwerk über Seile in Hub- und Senkrichtung bewegbar ist, an dessen unterem Ende ein Lastaufnahmemittel für die normierten Ladungsträger befestigt ist. Durch die Verwendung der fahrerlosen Transportfahrzeugen werden die Umschlagbereiche Schiene und Straße entkoppelt, was im Ergebnis dazu führt, dass die Eisenbahnwaggons schneller be- und entladen werden können, da keine logistische Abstimmung zwischen dem Eisenbahnwaggon und dem zugeordneten Lastkraftwagen erfolgen muss. In einer Ausgestaltung ist hierbei der Mast gegenüber der Krankatze um eine vertikale Drehachse drehbar.

In vorteilhafter Weise ist vorgesehen, dass an den Be- und Entladebereich ein Ladungsträgerlager mit einem Stapelgerät zum Transport der normierten Ladungsträger zwischen dem Be- und Entladebereich und dem Lagerbereich angrenzt. Das Ladungsträgerlager ermöglicht eine Zwischenlagerung der normierten Ladungsträger. Die Verwendung eines Ladungsträgerlagers erhöht die logistische Flexibilität und bewirkt eine weitere Entflechtung der Ankunftszeiten der Eisenbahnwaggons und der zugeordneten Lastkraftwagen.

Besonders vorteilhaft ist, dass an den Lagerbereich ein Umschlagbereich Straße angrenzt zum Be- und Entladen der normierten Ladungsträger auf beziehungsweise von Lastkraftwagen. Das Ladungsträgerlager ist somit mit den beiden Umschlagbereichen Schiene und Straße verbunden. Das Stapelgerät kann somit für Lageraufgaben und auch zur Be- und Entladung der Lastkraftwagen und der fahrerlosen Transportfahrzeuge verwendet werden.

Zur Erhöhung der Flexibilität und der Umschlagleistung ist vorgesehen, dass die fahrerlosen Transportfahrzeuge jeweils mit einer Hubplattform ausgerüstet sind, in dem Be- und Entladebereich Traggestelle zum Absetzen beziehungsweise Aufnehmen der normierten Ladungsträger von der Hubplattform der fahrerlosen Transportfahrzeuge angeordnet sind. Somit sind die fahrerlosen Transportfahrzeuge unabhängig von den Umschlag- und Stapelgeräten betreibbar.

In konstruktiver Sicht ist vorteilhaft, dass das Umschlaggerät und das Stapelgerät als Brücken- oder Portalkran ausgebildet sind.

Die Ausrichtung der normierte Ladungsträger in den einzelnen Bereich kann an den Umsatzfluss angepasst werden, dadurch dass der mittels des Umschlaggeräts und/oder des Stapelgeräts der transportierte normierte Ladungsträger um eine vertikale Achse verschwenkbar ist.

In konstruktiver Sicht ist vorteilhaft, dass das Stapelgerät eine entlang eines Kranträgers in einer Katzfahrtrichtung bewegbare Krankatze aufweist, an der ein starrer und sich in einer Hub- und Senkrichtung erstreckender Mast geführt ist, der über mindestens ein an der Krankatze angeordnetes Hubwerk über Seile in Hub- und Senkrichtung bewegbar ist, an dessen unterem Ende ein Lastaufnahmemittel für die normierten Ladungsträger befestigt ist. In einer Ausgestaltung ist hierbei der Mast gegenüber der Krankatze um eine vertikale Drehachse drehbar.

Für den Fall, dass die Gleisstrecken mit Oberleitungen versehen sind, ist vorgesehen, dass das Lastaufnahmemittel des Umschlaggeräts seitlich versetzt zu dem Mast angeordnet ist.

Eine stabile Führung der normierten Ladungsträger wird dadurch erreicht, dass der Kranträger aus einem ersten Träger und einem zweiten Träger besteht, an denen Katzschienen angeordnet sind, auf denen die Krankatze in Katzfahrtrichtung verfahrbar ist und der erste Träger und der zweite Träger in der rechtwinklig zu der Katzfahrtrichtung verlaufenden Kranfahrtrichtung voneinander beabstandet ist.

Einige Ausführungsbeispiele der Erfindung sind in der Zeichnung dargestellt und werden nachfolgend beschrieben. Es zeigen:
Figur 1 einen Übersichtsplan einer Umschlaganlage für normierte Ladungsträger wie ISO-Container und Wechselaufbauten zwischen Umschlagbereichen Straße und Schiene,
Figur 2 eine Ausschnittsvergrößerung von Figur 1 aus dem Bereich eines Umschlagbereichs Schiene,
Figur 3 eine Seitenansicht von Figur 2,
Figur 4 eine Ansicht entsprechend Figur 2 in einer alternativen Ausgestaltung des Umschlagbereichs Schiene,
Figur 5 eine Ansicht entsprechend Figur 2 in einer weiteren alternativen Ausgestaltung des Umschlagbereichs Schiene,
Figur 6 eine Seitenansicht eines Umschlaggeräts in einer alternativen Ausgestaltung und
Figur 7 einen gegenüber Figur 1 erweiterten Übersichtsplan einer Umschlaganlage für normierte Ladungsträger wie ISO-Container und Wechselaufbauten zwischen Umschlagbereichen Straße und Schiene.

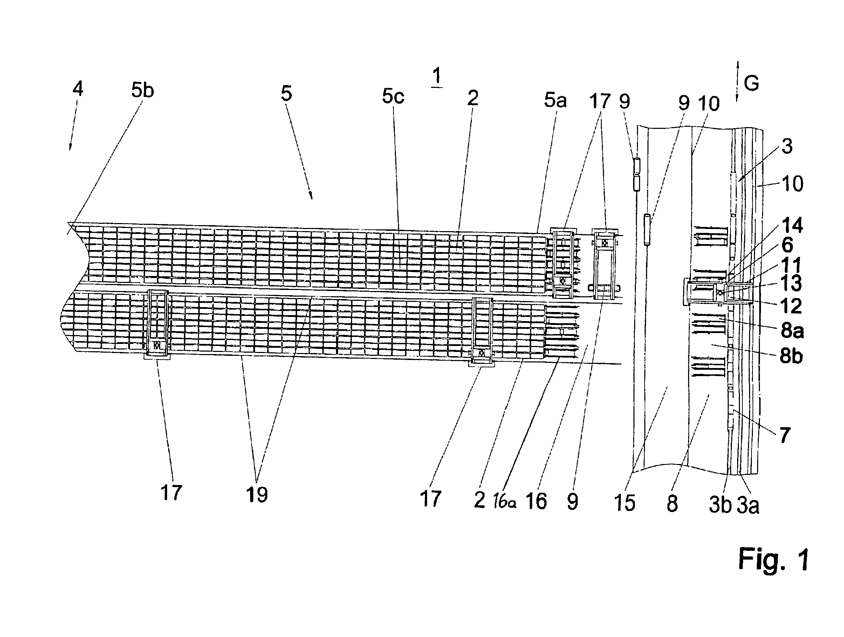

Die Figur 1 zeigt einen Übersichtsplan einer Umschlagsanlage 1 für normierte Ladungsträger 2, wie ISO-Container und Wechselaufbauten, die zwischen einem Umschlagbereich Schiene 3 und einem Umschlagbereich Straße 4 umgeschlagen werden. Der Übersichtsplan zeigt nur einen Ausschnitt der Umschlaganlage 1, lässt jedoch deren wesentliche Bestandteile erkennen. Die Umschlaganlage 1 besteht aus dem Umschlagbereich Schiene 3 und dem Umschlagbereich Straße 4, die über ein Ladungsträgerlager 5 miteinander verbunden sind. Das Ladungsträgerlager 5 dient zur Zwischenlagerung der normierten Ladungsträger 2.

Der Umschlagbereich Schiene 3 besteht im Wesentlichen aus einer ersten Gleisstrecke 3a, einer hierzu parallel und mit Abstand verlaufenden zweiten Gleisstrecke 3b und einem zugeordnetem Umschlaggerät 6. Auf den ersten und zweiten Gleisstrecken 3a und 3b sind für den An- und Abtransport der normierten Ladungsträger 2 Eisenbahnwaggons 7 verfahrbar. Das Umschlaggerät 6 ist als Brücken- oder Portalkran ausgebildet, das die ersten und zweiten Gleisstrecken 3a und 3b und einen Übergabebereich 8 überspannt. In den Übergabebereich 8 sind fahrerlose Transportfahrzeuge 9 ein- und ausfahrbar. Die fahrerlosen Transportfahrzeuge 9 sind geeignet zwei 20-Fuß-Container, einen 40-Fuß-Container oder einen 45-Fuß-Container zu transportieren. Mittels des Umschlaggeräts 6 werden die normierten Ladungsträger 2 zwischen den im Übergabebereich 8 stehenden fahrerlosen Transportfahrzeugen 9 und den Eisenbahnwaggons 7 umgeschlagen.

Das als Brücken- oder Portalkran ausgebildete Umschlaggerät 6 besteht im Wesentlichen aus einem entlang der ersten und zweiten Gleisstrecken 3a, 3b auf Schienen 10 in Gleisrichtung G verfahrbaren Kranträger 11. Die Schienen 10 verlaufen parallel zu den Gleisstrecken 3a, 3b. Auf dem Kranträger 11 ist quer zur Gleisrichtung G, die mit der Fahrtrichtung des Umschlaggeräts 6 übereinstimmt, eine Krankatze 12 in Katzfahrtrichtung K verfahrbar. An der Krankatze 12 ist ein Mast 13 aufgehängt, der vertikal und relativ zu der Krankatze 12 heb- und senkbar ist, um mittels eines an seinem unteren Ende 13a befestigten Lastaufnahmemittels 14 normierte Ladungsträger 2 aufzunehmen und abzugeben.

Je nach Ausgestaltung des Umschlaggerät 6 wird beim Umschlag zwischen den fahrerlosen Transportfahrzeugen 9 und den Eisenbahnwaggons 7 die Ausrichtung der normierten Ladungsträger 2 beibehalten oder diese werden je nach Bedarf um eine vertikale Achse verschwenkt. In dem vorliegenden Übersichtsplan nach Figur 1 sind die normierten Ladungsträger 2 auf den Eisenbahnwaggons 7 in Gleisrichtung G ausgerichtet und die fahrerlosen Transportfahrzeugen 9 mit ihrer Längsrichtung um 90 Grad hierzu verschwenkt. Entsprechender Weise weist das Umschlaggerät 6 hierfür eine Drehvorrichtung 26 auf.

Seitlich an die zweite Gleisstrecke 3b angrenzend ist der Übergabebereich 8 angeordnet. Im vorliegenden Fall besteht dieser Übergabebereich 8 im Wesentlichen aus Traggestellen 8a, auf die die von den Eisenbahnwaggons 7 entladenen normierten Ladungsträger 2 zur Zwischenlagerung abgestellt werden können oder von denen mittels des Umschlaggeräts 6 aufgenommen werden können, und/oder aus benachbarten Stellplätzen 8b, auf denen die fahrerlosen Transportfahrzeuge 9 warten können, um ihren normierten Ladungsträger 2 an das Umschlaggerät 6 abgeben oder von diesen aufnehmen zu können. Die fahrerlosen Transportfahrzeuge 9 sind jeweils mit einer Hubplattform 9a versehen, so dass bei abgesenkter Hubplattform 9a die fahrerlosen Transportfahrzeuge 9 in die Traggestelle 8a einfahren und somit einen hierauf ruhenden normierten Ladungsträger 2 unterfahren können. Zur Aufnahme dieses normierten Ladungsträgers 2 wird dann die Hubplattform 9a angehoben und der normierte Ladungsträger 2 von dem Traggestell 8a abgehoben. Dann fährt das fahrerlose Transportfahrzeug 9 mit angehobener Hubplattform 9a und darauf ruhendem normierten Ladungsträger 2 aus dem Traggestell 8a, senkt dann die Hubplattform 9a ab und setzt die Fahrt fort. Das Abstellen eines normierten Ladungsträgers 2 auf einem Traggestell 8a läuft in umgekehrter Reihenfolge ab.

An den Übergabebereich 8 schließt sich ein Fahrbereich 15 an, in dem die fahrerlosen Transportfahrzeuge 9 im Automatikbetrieb verfahren. An diesen Fahrbereich 15 angrenzend und vorzugsweise gegenüberliegend zu dem Übergabebereich 8 ist ein Be- und Entladebereich 16 angeordnet, der die Schnittstelle zu dem Ladungsträgerlager 5 bildet.

In diesem Be- und Entladebereich 16 sind wiederum Tragrahmen 16a angeordnet, um dort die normierten Ladungsträger 2 für die weitere Handhabung zwischen zu lagern. Auch können dort Stellplätze für die fahrerlosen Transportfahrzeuge 9 vorgesehen sein, um ohne Tragrahmen 16a die normierten Ladungsträger 2 direkt mit dem fahrerlosen Transportfahrzeug 9 umschlagen zu können. In dem Be- und Entladebereich 16 werden die Traggestelle 16a mit normierten Ladungsträger 2 beladen oder diese von dort entladen mittels eines in dem Ladungsträgerlager 5 arbeitenden und als Brücken- oder Portalkran ausgebildeten Stapelgeräts 17.

Das Ladungsträgerlager 5 besteht aus einer Vielzahl von parallel nebeneinander und zeilenartig angeordneten Ladungsträgerlagerbereichen 5c, denen jeweils an ihrem schienenseitigen Ende 5a ein Be- und Entladebereich 16 und an ihrem straßenseitigen Ende 5b ein Ein- und Auslagerungsbereich 18 zugeordnet ist. Jedem Ladungsträgerlagerbereich 5c sind ein oder mehrere Stapelgeräte 17 zugeordnet, die entlang der Ladungsträgerlagerbereiche 5c in Kranfahrtrichtung auf Schienen 19 verfahrbar sind. Von dem Stapelgerät 17 werden die normierten Ladungsträger 2 zwischen dem Ladungsträgerlagerbereich 5c und dem Be- und Entladebereich 16 beziehungsweise dem Ein- und Auslagerungsbereich 18 transportiert. Jeder Ladungsträgerlagerbereich 5c weist neben dem einen oder mehreren Stapelgeräten 17 auch einen Abstellbereich 5d für die normierten Ladungsträger 2 auf. Der Abstellbereich 5d hat eine rechteckige Grundfläche, auf dem die normierten Ladungsträger 2 in Spalten und Zeilen angeordnet sind. Hierbei werden bis zu fünf normierte Ladungsträger 2 aufeinander gestapelt gelagert. Die abgestellten normierten Ladungsträger 2 sind mit ihrer Längserstreckung im Wesentlichen parallel zu den Schienen 19 und somit in Kranfahrtrichtung der Stapelgeräte 17 ausgerichtet. Diese Ausrichtung der normierten Ladungsträger 2 ist auch im Be- und Entladebereich 18 mit den an- und abfahrenden Lastkraftwagen 20 wieder zu finden, so dass die Stapelgeräte 17 jeweils neben etwaig erforderlichen Ausrichtungskorrekturen die normierten Ladungsträger 2 bei der Aufnahme und Abgabe nicht verschwenken müssen. Grundsätzlich ist es auch möglich, das Stapelgerät 17 mit einer Drehvorrichtung auszurüsten, um die Ausrichtung der normierten Ladungsträger 2 in der horizontalen Ebene zu verändern. Der Aufbau des Stapelgeräts 17 stimmt im Wesentlichen mit dem des Umschlaggeräts 6 überein.

An dem schienenseitigen Ende 5a des Ladungsträgerlagers 5 werden die normierten Ladungsträger 2 von dem Stapelgerät 17 in dem Ein- und Auslagerungsbereich 16 auf die dortigen Traggestelle 16a abgestellt oder von dort aufgenommen. Der Ein- und Auslagerungsbereich 16 dient als Schnittstelle zu dem Umschlagbereich Schiene 3 und weist mehrere nebeneinander angeordnete Traggestelle 16a für normierte Ladungsträger 2 auf, in die fahrerlose Transportfahrzeuge 9 mit ihren Hubplattformen 9a einfahren können, um die dort zwischengelagerten normierte Ladungsträger 2 aufzunehmen beziehungsweise dort abzustellen. Es ist auch möglich, dass die Container 2 direkt mittels des Stapelkrans 17 von dessen Plattform aufgenommen beziehungsweise dort abgestellt werden. Dann sind keine Traggestelle 16a vorhanden und die fahrerlose Transportfahrzeuge 9 weisen keine Hubtische auf.

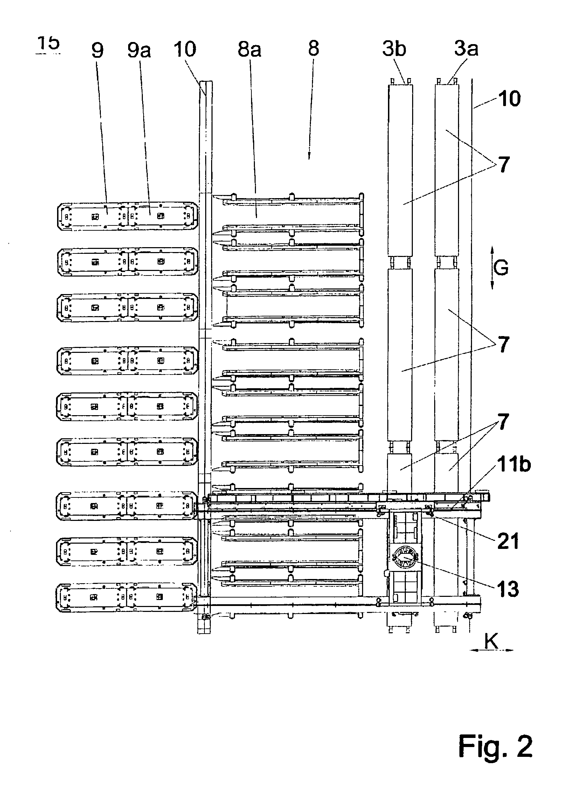

Die Figur 2 zeigt eine Ausschnittsvergrößerung von Figur 1 aus dem Bereich des Umschlagbereichs Schiene 3. In dieser Ausschnittsvergrößerung sind zwischen den Traggestellen 8a keine Stellplätze 8b für die fahrerlosen Transportfahrzeuge 9 gezeigt. Das als Halbportalkran ausgebildete Umschlaggerät 6 ist entlang der Schienen 10 in Gleisrichtung G verfahrbar. Entsprechend der Halbportalkranbauweise ist eine der beiden Schienen 10 und zwar die an die erste Gleisstrecke 3a angrenzende Schiene 10 auf etwa einem Höhenniveau wie die Gleisstrecken 3a, 3b angeordnet. Die gegenüberliegende Schiene 10 ist aufgeständert, so dass die fahrerlosen Transportfahrzeuge 9 kreuzungsfrei in die Traggestelle 8a und/oder Stellplätze 8b ein- und ausfahren können.

Die Krankatze 12 besteht im Wesentlichen aus einem rechteckigen Grundrahmen 12a, in dessen vier Ecken Katzfahrwerke 21 angeordnet sind, die auf den Kranträger 12 angeordneten Katzschienen verfahren. In dem Grundrahmen 9a der Krankatze 9 befindet sich im mittleren Bereich eine Öffnung, durch die ein Drehrohr 26 hindurch geführt ist. Das Drehrohr 26 stützt sich an seinem oberen Ende über eine Drehverbindung 26a an dem Grundrahmen 12a der Krankatze 12 ab und ist über die Drehverbindung 26a um eine vertikale Drehachse drehbar. Innerhalb des Drehrohrs 22 verläuft der Mast 13 und ist dort geführt.

Auch zeigt die Figur 2, dass der Kranträger 11 als Doppelträger mit einem ersten Träger 11 a und einem zweiten Träger 11 b ausgebildet ist, die in Gleisrichtung G gesehen auf einem Höhenniveau und mit Abstand hintereinander angeordnet sind.

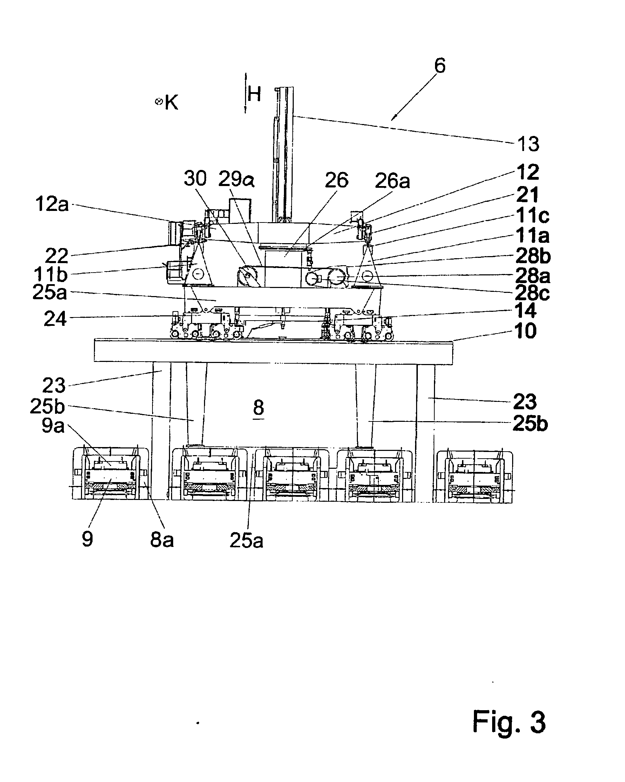

In der Figur 3 ist eine Seitenansicht von Figur 2 gezeigt. Es ist ersichtlich, dass der erste Träger 11a und der zweite Träger 11 b jeweils einen dreieckförmigen Querschnitt aufweisen. Dieser dreieckförmige Querschnitt hat die Form eines gleichschenkligen Dreiecks, wobei der Winkel im Bereich der Spitze 11c etwa 30° beträgt. Im Bereich der Spitze 11 c des ersten Trägers 11a und des zweiten Trägers 11 b ist jeweils die Katzschiene 22 befestigt, auf der die Krankatze 12 in Katzfahrtrichtung K verfahrbar ist. Im vorderen Bereich ist entsprechend der Halbportalbauweise die Schiene 10 über Stützen 23 aufgeständert und die ersten Trägers 11a und des zweiten Trägers 11 b sind über einen Grundträger 25a miteinander verbunden und stützen sich direkt über Kranfahrwerke 24 auf der Schiene 10 ab. Auch entsprechend der Halbportalbauweise sind im hinteren Bereich ist die Enden des ersten Trägers 11a und des zweiten Trägers 11 b über zwei vertikale Träger 25b auf den Kranfahrwerke 24 abgestützt. Die unteren Enden der beiden vertikalen Träger 25b sind über einen weiteren Grundträger 25a u-förmig miteinander verbunden.

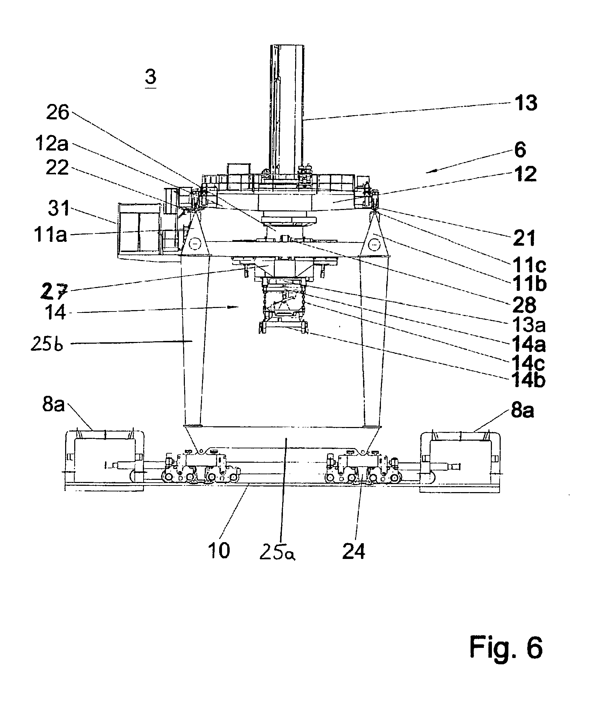

Auch lässt die Figur 3 die Drehverbindung 26a und das Drehrohr 26 erkennen. Zum Antrieb des Drehrohrs 16 ist ein an seiner Außenseite umlaufender Zahnkranz vorgehen, der mit einem elektromotorischen Drehantrieb im Eingriff steht. Um den Mast 13 in Hub- und Senkrichtung H zu bewegen, ist an dem unteren Ende des Drehrohrs 26 ein rechteckförmiger Hubrahmen 27 (siehe Figur 6) starr befestigt. Auf dem Hubrahmen 27 der Krankatze 12 ist ein Hubwerk 28 für den Mast 13 angeordnet. Das Hubwerk 28 weist eine erste Seiltrommel 28a und eine zweite nicht dargestellte Seiltrommel auf, die koaxial zueinander und an einem gemeinsamen Getriebe 28b gelagert sind, das von einem Antriebsmotor 28c angetrieben wird. Von der ersten Seiltrommel 28a läuft ein erstes Seil 29a und ein zweites in der Figur 3 verdecktes Seil 29b ab. Von der zweiten Seiltrommel läuft ein drittes Seil 29c und ein viertes Seil 29d ab, die ebenfalls in der Figur 3 nicht zu erkennen sind. Entsprechend sind vier Seile 29 vorhanden, die entweder direkt von der ersten oder zweiten Seiltrommel 28a vertikal nach unten ablaufen beziehungsweise horizontal auf die gegenüberliegende Seite des Mastes 13 geführt werden und dort über eine Umlenkrolle 30 mit einer horizontalen Drehachse um 90° vertikal nach unten umgelenkt werden. Die Enden der Seile 29 sind mit dem Lastaufnahmemittel 14 verbunden.

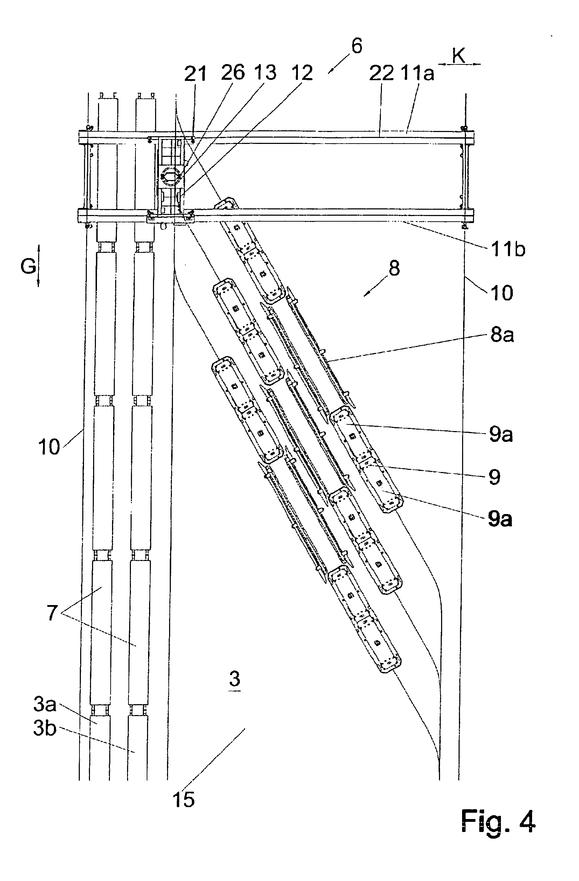

Die Figur 4 zeigt eine der Figur 2 im Wesentlichen entsprechende Ansicht eines Umschlagbereichs Schiene 3 in einer alternativen Ausgestaltung. Auch hier sind die beiden parallel verlaufenden ersten und zweiten Gleisstrecken 3a, 3b mit den hierauf verfahrbaren Eisenbahnwaggons 7 erkennbar sowie die parallel zu der Gleisrichtung verlaufenden Schienen 10 für das Umschlaggerät 6. Das Umschlaggerät 6 ist hier als Portalkran ausgebildet, da die fahrerlosen Transportfahrzeuge 9 nicht die Schienen 11 kreuzen müssen, um in den Fahrbereich 15 zwischen den Gleisstrecken 3a, 3b und den Schienen 11 ein und ausfahren zu können. Das Umschlaggerät 6 ist wie zuvor beschrieben mit einem Drehrohr 26 und einer Drehverbindung 26a ausgerüstet und kann somit die von dem Lastaufnahmemittel 14 aufgenommenen normierten Ladungsträger in einer horizontalen Ebene um eine vertikale Drehachse verschwenken. Dies ist erforderlich um die von den Eisenwaggons 7 aufgenommen normierten Ladungsträger 2 auf Traggestellen 8a innerhalb des Übergabebereiches 8 abstellen zu können beziehungsweise von diesen aufnehmen zu können. Die Traggestelle 8a sind mit ihrer Längserstreckung in etwa in einem Winkel von 30° zu der Gleisrichtung G ausgerichtet. Somit können die fahrerlosen Transportfahrzeuge 9 von einer Seite in die Traggestelle 8a einfahren, dann dort die normierten Ladungsträger 2 aufnehmen beziehungsweise abgegeben und auf der gegenüberliegenden Seite herausfahren, um dann den Fahrbereich 15 am Ende des Umschlaggeräts 6 und somit dessen Schienen 10 zu verlassen.

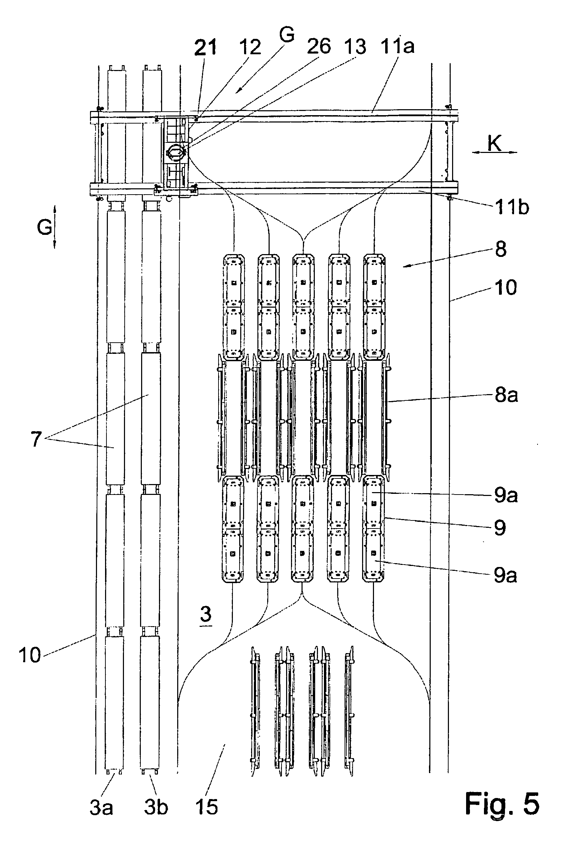

Die Figur 5 zeigt eine weitere alternative Ausgestaltung des Umschlagsbereichs Schiene 3. Der grundsätzliche Aufbau ähnelt der zuvor zu Figur 4 beschriebenen Ausgestaltung. Auch hier verfahren die fahrerlosen Transportfahrzeuge 9 in einem zwischen den Schienen 11 und den Gleisstrecken 3a, 3b angeordnetem Fahrbereich. Hier kann jedoch auf die Anordnung eines Drehrohrs 26 und einer Drehverbindung 26a an dem Umschlaggerät 6 verzichtet werden, da die Traggestelle 8a für die Zwischenlagerung und der normierten Ladungsträger 2 zentral im Fahrbereich und parallel zu den Gleisstrecken 3a und 3b ausgerichtet sind.

Des Weiteren zeigt die Figur 6 eine Seitenansicht eines Umschlaggerätes 6 in Ausgestaltung eines Portalkrans. In Bezug auf die detaillierte Beschreibung wird auf die zuvor gegebenen Ausführungen zu den Figuren 2 und 3 verwiesen. Als wesentlicher Unterschied ist hier zu erkennen, dass die ersten Träger 11 a und zweiten Träger 11 b über vertikale Stützen 25b auf den Kranfahrwerken 24 abgestützt sind. Die unteren Enden der vertikalen Stützen 25b werden über ein diese verbindenden horizontalen Grundträger 25a stabilisiert.

Des Weiteren zeigt die Figur 6, dass das Lastaufnahmemittel 14 in einen Aufhängerahmen 14a, der fest an dem unteren Ende 13a des Mastes 13 befestigt ist, und in einen Spreaderrahmen 14b, der über Ketten 14c an den Aufhängerahmen 14a aufgehängt ist, aufgeteilt ist. Auch zeigt die Figur 6, dass an der Außenseite des zweiten Trägers 11 b ein containerartiger Behälter 31 befestigt ist, in dem die Steuerung und Leistungselektrik beziehungsweise -elektronik für das Umschlaggerät 6 angeordnet ist.

Zwischen denen im Umschlagbereich Schiene 3 jeweils gerade verlaufenden ersten und zweiten Gleisstrecken 3a und 3b können in üblicher Weise eine Vielzahl von Fahrleitungsmasten angeordnet sein, die einen Fahrleitungsdraht jeweils oberhalb der ersten und zweiten Gleisstrecke 3a, 3b tragen. Das Umschlaggerät 6 weist dann ein seitlich auskragendes Lastaufnahmemittel 14 auf.

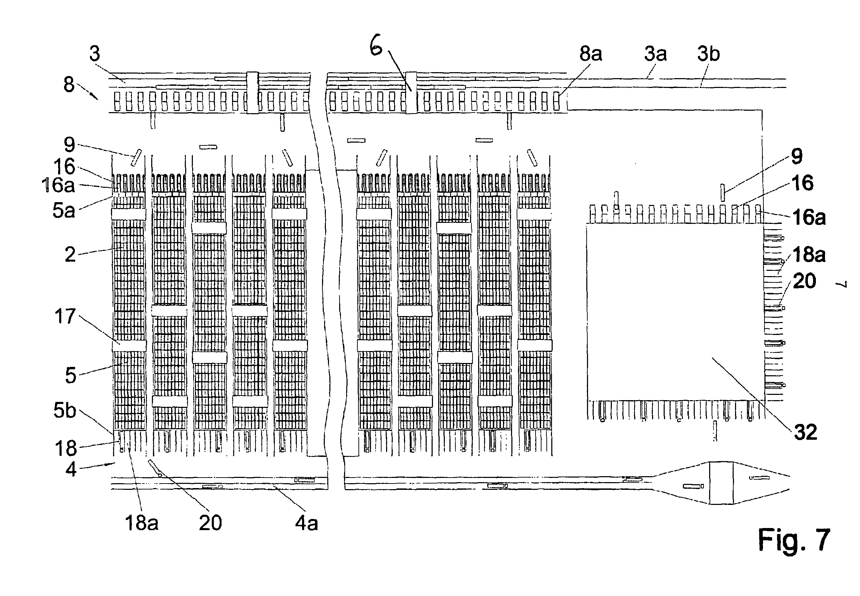

Die Figur 7 zeigt einen gegenüber Figur 1 erweiterten Übersichtsplan einer Umschlaganlage 1 für normierte Ladungsträger 2, wie ISO-Container und Wechselaufbauten. Der Übersichtsplan zeigt somit alle wesentlichen Bestandteile des Übersichtsplans nach Figur 1 wie den Umschlagbereich Schiene 3, die ersten und zweiten Gleisstrecken 3a, 3b, das Ladungsträgerlager 5, die Umschlaggeräte 6, den Übergabebereich 8, die Traggestelle 8a, die fahrerlosen Transportfahrzeuge 9, die Be- und Entladebereiche 16 und die Stapelgeräte 17. Außerdem ist eine Vielzahl von nebeneinander angeordneten Ladungsträgerlagern 5 gezeigt.

Gegenüber der Figur 1 ist der Umschlagbereich Straße 4 detaillierter dargestellt. An dem straßenseitigen Ende 5b des Ladungsträgerlagers 5 werden die normierten Ladungsträger 2 von dem Stapelgerät 17 in dem Ein- und Auslagerungsbereich 18 auf die dortigen auf Stellplätzen 18a abgestellten Lastkraftwagen 20 abgestellt oder von diesen aufgenommen. Der Ein- und Auslagerungsbereich 18 ist die Schnittstelle zu dem Umschlagbereich Straße 4 und weist mehrere nebeneinander angeordnete Stellplätze 18a für Lastkraftwagen 20 auf.

Des Weiteren ist neben den vielen Ladungsträgerlagern 5 ein Distributionslager 32 angeordnet, welches zu dem Umschlagbereich Schiene 3 zugewandte Be- und Entladebereiche 16 für die fahrerlosen Transportfahrzeuge 9 aufweist. Die Be- und Entladebereiche 16 sind wie bei den Ladungsträgerlagern 5 mit Traggestellen 16a zur Zwischenlagerung der Ladungsträger 2 ausgestattet. Außerdem ist das Distributionslager 32 mit Ein- und Auslagerungsbereichen 18 versehen, die dem Umschlagbereich Straße 4 mit der Straße 4a für den An- und Abtransport der Ladungsträger 2 mittels Lastkraftwagen 20 zugewandt sind. Die Ein- und Auslagerungsbereiche 18 weisen parallel nebeneinander angeordnete Stellplätze 18a für die rückwärts in diese Stellplätze 18a einfahrbaren Lastkraftwagen 20 auf.

### Bezugszeichenliste

- 1: Umschlaganlage
- 2: normierter Ladungsträger
- 3: Umschlagbereich Schiene
- 3a: erste Gleisstrecke
- 3b: zweite Gleisstrecke
- 4: Umschlagbereich Straße
- 4a: Straße
- 5: Ladungsträgerlager
- 5a: schienenseitiges Ende
- 5b: straßenseitiges Ende
- 5c: Ladungsträgerlagerbereich
- 6: Umschlaggerät
- 7: Eisenbahnwaggon
- 8: Übergabebereich
- 8a: Traggestell
- 8b: Stellplatz
- 9: fahrerloses Transportfahrzeug
- 9a: Hubplattform
- 10: Schienen
- 11: Kranträger
- 11a: erster Träger
- 11b: zweiter Träger
- 11c: Spitze
- 12: Krankatze
- 12a: Grundrahmen
- 13: Mast
- 13a: unteres Ende des Mastes
- 14: Lastaufnahmemittel
- 14a: Aufhängerahmen
- 14b: Spreaderrahmen
- 14c: Kette
- 15: Fahrbereich
- 16: Be- und Entladebereich
- 16a: Traggestell
- 17: Stapelgerät
- 18: Ein- und Auslagerungsbereich
- 18a: Stellplatz
- 19: Schienen
- 20: Lastkraftwagen
- 21: Katzfahrwerke
- 22: Katzschiene
- 23: Stütze
- 24: Kranfahrwerk
- 25a: Grundträger
- 25b: vertikale Stütze
- 26: Drehrohr
- 26a: Drehverbindung
- 27: Hubrahmen
- 28: Hubwerk
- 28a: erste Seiltrommel
- 28b: Getriebe
- 28c: Antriebsmotor
- 29: Seile
- 30: Umlenkrolle
- 31: Behälter
- 32: Distributionslager

- G: Gleisrichtung
- H: Hub- und Senkrichtung
- K: Katzfahrtrichtung

## Patentansprüche

1. Anlage zum Umschlag von normierten Ladungsträgern, insbesondere von ISO-Containern und Wechselaufbauten, zwischen Straße und Schiene, mit einem in einem Umschlagbereich Schiene an eine Gleisstrecke für Eisenbahnwaggons angrenzenden Umschlaggerät zum Be- und Entladen von normierten Ladungsträgern auf beziehungsweise von den Eisenbahnwaggons, **dadurch gekennzeichnet, dass** an das Umschlaggerät (6) ein Fahrbereich (15) für fahrerlose Transportfahrzeuge (9) zum An- und Abtransport von normierten Ladungsträger zu beziehungsweise von dem Umschlaggerät (6) angrenzt und an den Fahrbereich (15) ein Be- und Entladebereich (16) zum An- und Abtransport von normierten Ladungsträgern (2) angrenzt und das Umschlaggerät (6) eine entlang eines Kranträgers (11) in einer Katzfahrtrichtung (K) bewegbare Krankatze (12) aufweist, an der ein starrer und sich in einer Hub- und Senkrichtung (H) erstreckender Mast (13) geführt ist, der über mindestens ein an der Krankatze (12) angeordnetes Hubwerk (28) über Seile (29) in Hub- und Senkrichtung (H) bewegbar ist, an dessen unterem Ende ein Lastaufnahmemittel (14) für die normierten Ladungsträger (2) befestigt ist.

2. Anlage nach Anspruch 1, **dadurch gekennzeichnet, dass** an den Be- und Entladebereich (16) ein Ladungsträgerlager (5) mit einem Stapelgerät (17) zum Transport der normierten Ladungsträger (2) zwischen dem Be- und Entladebereich (16) und einem Ladungsträgerlagerbereich (5c) angrenzt.

3. Anlage nach Anspruch 2, **dadurch gekennzeichnet, dass** an den Lagerbereich (5) ein Umschlagbereich Straße (4) angrenzt zum Be- und Entladen der normierten Ladungsträger (2) auf beziehungsweise von Lastkraftwagen (20).

4. Anlage nach einem der Ansprüche 1 bis 3, **dadurch gekennzeichnet, dass** die fahrerlosen Transportfahrzeuge (9) jeweils mit einer Hubplattform (9a) ausgerüstet sind, in dem Be- und Entladebereich (16) Traggestelle (16a) zum Absetzen beziehungsweise Aufnehmen der normierten Ladungsträger (2) von der Hubplattform (9a) der fahrerlosen Transportfahrzeuge (9) angeordnet sind.

5. Anlage nach einem der Ansprüche 1 bis 4, **dadurch gekennzeichnet, dass** das Umschlaggerät (6) und das Stapelgerät (17) als Brücken- oder Portalkran ausgebildet sind.

6. Anlage nach einem der Ansprüche 1 bis 5, **dadurch gekennzeichnet, dass** mittels des Umschlaggeräts (6) und/oder des Stapelgeräts (17) der transportierte normierte Ladungsträger (2) um eine vertikale Achse verschwenkbar ist.

7. Anlage nach einem der Ansprüche 2 bis 6, **dadurch gekennzeichnet, dass** das Stapelgerät (17) eine entlang eines Kranträgers (11) in einer Katzfahrtrichtung (K) bewegbare Krankatze (12) aufweist, an der ein starrer und sich in einer Hub- und Senkrichtung (H) erstreckender Mast (13) geführt ist, der über mindestens ein an der Krankatze (12) angeordnetes Hubwerk (28) über Seile (29) in Hub- und Senkrichtung (H) bewegbar ist, an dessen unterem Ende ein Lastaufnahmemittel (14) für die normierten Ladungsträger (2) befestigt ist.

8. Anlage nach einem der Ansprüche 1 bis 7, **dadurch gekennzeichnet, dass** das Lastaufnahmemittel (14) des Umschlaggeräts (6) seitlich versetzt zu dem Mast (13) angeordnet ist.

9. Anlage nach einem der Ansprüche 1 bis 8, **dadurch gekennzeichnet, dass** der Kranträger (11) aus einem ersten Träger (11a) und einem zweiten Träger (11b) besteht, an denen Katzschienen (22) angeordnet sind, auf denen die Krankatze (12) in Katzfahrtrichtung (K) verfahrbar ist und der erste Träger (11a) und der zweite Träger (11b) in der rechtwinklig zu der Katzfahrtrichtung (K) verlaufenden Kranfahrtrichtung voneinander beabstandet ist.

10. Anlage nach einem der Ansprüche 1 bis 9, **dadurch gekennzeichnet, dass** der Mast (13) gegenüber der Krankatze (12) um eine vertikale Drehachse drehbar ist.

## Claims

1. System for transferring standard cargo holders, and especially ISO containers and swap bodies, between roads and railways, having a transferring unit for loading and unloading standard cargo holders onto and off railway wagons, which transferring unit adjoins a railway track for railway wagons in a rail transfer area, **characterised in that** adjoining the transferring unit (6) there is a travel area (15) for driverless transporting vehicles (9) for the inward and outward transport of standard cargo holders to and from the transferring unit (6), and adjoining the travel area (15) there is a loading and unloading area (16) for the inward and outward transport of standard cargo holders (2), and the transferring unit (6) has a crane trolley (12) able to be moved along a crane beam (11) in a direction of trolley travel (K), on which crane trolley (12) is guided a rigid mast (13) which extends in a raising and lowering direction (II), which can be moved in the raising and lowering direction (H) via cables (29) by means of at least one lifting mechanism (28) arranged on the crane trolley (12), and to the bottom end of which a load picking-up means (14) for the standard cargo holders (2) is fastened.

2. System according to claim 1, **characterised in that** adjoining the loading and unloading area (16) there is a cargo holder store (5) having a stacking unit (17) for transporting the standard cargo holders (2) between the loading and unloading area (16) and a storage region (5c) for cargo holders.

3. System according to claim 2, **characterised in that** adjoining the storage area (5) there is a road transfer area (4) for the loading and unloading of the standard cargo holders (2) onto and off lorrics (20).

4. System according to one of claims 1 to 3, **characterised in that** the driverless transporting vehicles (9) are each equipped with a lifting platform (9a), and supporting structures (16a) for placing down and picking up the standard cargo holders (2) on and from the lifting platforms (9a) of the driverless transporting vehicles (9) are arranged in the loading and unloading area (16).

5. System according to one of claims I to 4, **characterised in that** the transferring unit (6) and stacking unit (17) take the form of bridge or gantry cranes.

6. System according to one of claims 1 to 5, **characterised in that** the standard cargo holders (2) which are transported can be pivoted on a vertical axis by means of the transferring unit (6) and/or the stacking unit (17).

7. System according to one of claims 2 to 6, **characterised in that** the stacking unit (17) has a crane trolley (12) able to be moved along a crane beam (11) in a direction of trolley travel (K), on which crane trolley (12) is guided a rigid mast (13) which extends in a raising and lowering direction (II), which can be moved in the raising and lowering direction (H) via cables (29) by means of at least one lifting mechanism (28) arranged on the crane trolley, and to the bottom end of which a load picking-up means (14) for the standard cargo holders (2) is fastened.

8. System according to one of claims 1 to 7, **characterised in that** the load picking-up means (14) of the transferring unit (6)n is arranged to be offset laterally from the mast(13).

9. System according to one of claims 1 to 8, **characterised in that** the crane beam (11) comprises a first beam (11a) and a second beam (11b) on which are arranged trolley rails (22) on which the crane trolley (12) is displaceable in the direction of trolley travel (K), and the first beam (11a) and the second beam (11b) are spaced away from one another in the direction of crane travel, which extends at right angles to the direction of trolley travel (K).

10. System according to one of claims 1 to 9, **characterised in that** the mast (13) is rotatable relative to the crane trolley (12) on a vertical axis of rotation.

## Revendications

1. Installation de transbordement de supports de chargement normalisés, notamment de caisses mobiles et conteneurs ISO, entre la route et le rail, ladite installation comportant un appareil de transbordement qui est disposé, dans une zone de transbordement côté rail, à proximité d'un rail d'une voie ferrée pour wagons de chemin de fer et qui est destiné à charger et décharger des supports de chargement normalisés sur les wagons de chemin de fer respectivement de ceux-ci, **caractérisée en ce qu'**une zone de roulement (15) pour véhicules de transport sans conducteur (9) est prévue à proximité de l'appareil de transbordement (6) pour apporter et emporter des supports de chargement normalisés à respectivement de l'appareil de transbordement (6) et une zone de chargement et déchargement (16) est prévue à proximité de la zone de roulement (15) pour apporter et emporter des supports de chargement normalisés et l'appareil de transbordement (6) comporte un chariot roulant (12) qui est déplaçable le long d'une poutre de grue (11) dans une direction de roulement de chariot (K) et au niveau duquel est guidé un mât rigide (13) qui s'étend dans une direction de levage et d'abaissement (H) et qui est déplaçable, par le biais d'au moins un treuil de levage (28) disposé au niveau du chariot roulant (12), dans la direction de levage et d'abaissement (H) au moyen d'un câble (29) à l'extrémité inférieure duquel est fixé un moyen de réception de charge (14) destiné aux supports de chargement normalisés (2).

2. Installation selon la revendication 1, **caractérisée en ce qu'**il est prévu à proximité de la zone de chargement et de déchargement (16) un magasin de stockage de supports de chargement (5) comportant un gerbeur (7) pour le transport des supports de chargement normalisés (2) entre la zone de chargement et de déchargement (16) et une zone de stockage de supports de chargement (5c).

3. Installation selon la revendication 2, **caractérisée en ce qu'**il est prévu à proximité de la zone de stockage (5) une zone de transbordement côté route pour le chargement et le déchargement des supports de chargement normalisés (2) sur respectivement depuis des camions (20).

4. Installation selon l'une des revendications 1 à 3, **caractérisée en ce que** les véhicules de transport sans conducteur (9) sont équipés chacun d'une plateforme de levage (9a) et **en ce que** des cadres porteurs (16a) sont disposés dans la zone de chargement et de déchargement (16) pour poser respectivement soulever les supports de chargement normalisés (2) par rapport à la plateforme de levage (9a) du véhicule de transport sans conducteur (9).

5. Installation selon l'une des revendications 1 à 4, **caractérisée en ce que** l'appareil de transbordement (6) et l'appareil gerbeur (17) sont conformés en pont roulant ou en grue à portique.

6. Installation selon l'une des revendications 1 à 5, **caractérisée en ce que** au moyen l'appareil de transbordement (6) et/ou l'appareil gerbeur (17) l'on peut faire pivoter le support de chargement normalisé (2) transporté autour d'un axe vertical.

7. Installation selon l'une des revendications 2 à 6, **caractérisée en ce que** l'appareil gerbeur (17) comporte un chariot roulant (12) qui est déplaçable le long d'une poutre de grue (11) dans une direction de roulement de chariot (K) et au niveau duquel est guidé un mât rigide (13) qui s'étend dans une direction de levage et d'abaissement (H) et qui est déplaçable, par le biais d'au moins un treuil de levage (28) disposé au niveau du chariot roulant (12), dans la direction de levage et d'abaissement (H) au moyen d'un câble (29) à l'extrémité inférieure duquel est fixé un moyen de réception de charge (14) destiné aux supports de chargement normalisés (2).

8. Installation selon l'une des revendications 1 à 7, caractérisée que le moyen de réception de charge (14) de l'appareil de transbordement (6) est disposé de façon décalée latéralement par rapport au mât (13).

9. Installation selon l'une des revendications 1 à 8, **caractérisée en ce que** la poutre de grue (11) est constituée d'une première poutre (11a) et d'une seconde poutre (11b) au niveau desquelles sont disposés des rails de chariot (22) sur lesquels le chariot roulant (12) est déplaçable dans la direction de roulement de chariot (K) et la première poutre (11a) et la seconde poutre (11b) sont disposées à distance l'une de l'autre dans la direction de roulement de chariot s'étendant à angle droit par rapport la direction de roulement de chariot (K).

10. Installation selon l'une des revendications 1 à 9, **caractérisée en ce que** le mât (13) est apte à tourner par rapport au chariot roulant (12) autour d'un axe de rotation vertical.
